# EUROPEAN PATENT SPECIFICATION

(11) **EP 3 904 126 B1**
(45) Date of publication and mention of the grant of the patent: **16.08.2023**
(21) Application number: 21170821.9
(22) Date of filing: 28.04.2021
(51) Int. Cl.: B60C 23/00

(54) **PRESSURE CONTROL CIRCUIT OF A TIRE ON BOARD VEHICLE**
DRUCKREGELKREIS EINES REIFENS AN BORD EINES FAHRZEUGS
CIRCUIT DE COMMANDE DE PRESSION D'UN PNEU À BORD D'UN VÉHICULE

(30) Priority: 28.04.2020 IT 202000009313
(43) Date of publication of application: 03.11.2021
(73) Proprietor: CNH Industrial Italia S.p.A., 10156 Torino (IT)
(72) Inventor: Ciarrocchi, Marco Pietro, 64027 Sant'Omero (TE) (IT); Lenzini, Nicola, 41027 Pievepelago (MO) (IT)
(74) Representative: CNH Industrial IP Department

(56) References cited:
- EP-A1- 3 227 129
- EP-A2- 2 089 242
- DE-A1- 2 141 087
- DE-A1-102007 036 201

## Description

### Field of the invention

The present invention relates to a pressure control circuit of a tire on board the vehicle. These systems are also referred to as central inflation systems, since inflation is expected to be carried out by means of a compressed air source of the same vehicle without having to manually connect the wheel to this source.

### State of the art

US2017/0299077 shows a tire pressure control circuit arranged on board a vehicle as per the present invention.

This system comprises a control system consisting of a pair of electro-pneumatic control valves for each wheel of the vehicle.

The control system is supervised by a processing unit, CONTROLLER, which controls the operation of the aforementioned pair of valves.

The control system is connected, on one side, to a source of pressurized air and on the other, through a single pneumatic line, to a pneumatic valve arranged in the wheel rim and therefore proximal to the wheel.

The single line allows both the control of the pneumatic valve, both the inflation and deflation of the wheel. Other examples can be found in DE102007036201A1, DE2141087A1, EP3227129A1, EP2089242A2.

If not specifically excluded in the detailed description that follows, what is described in this chapter is to be considered as an integral part of the detailed description.

### Summary of the invention

The purpose of the present invention is to provide an alternative tire pressure control system configured to be used on board of a vehicle

Another object of the present invention is to simplify the scheme of the prior art allowing easier integration into a vehicle.

Furthermore, another object of the present invention is to isolate the wheel when not subject to control and/or monitoring of a relative pressure.

In the context of the present invention, the term "pressure control" means "pressure manipulation".

The basic idea of the present invention is to use a single pneumatic line that interconnects the control circuit with a proximal group positioned proximal to the wheel, so that the single pneumatic line is used only for monitoring and inflating the pressure of the corresponding tire. Preferably, the deflation is carried out locally, i.e. without using the single line.

Preferably, the processing unit arranged to control the circuit has not to check or store the state of the valves, as it depends exclusively on the pressure currently applied to the single line.

According to the present invention, the pressure control circuit of a tire, configured to be used on board of a vehicle, comprises connection means to connect to a source of compressed air, a control system arranged to control a flow of compressed air from the connection means to the tire, a proximal group operatively connected with the tire, a single pneumatic line, operatively connecting the control system with the proximal group, wherein the control system is designed to pressurize the single line at a first pressure, inflation, and a second pressure, of activation, greater than the first pressure, and wherein the proximal group is configured to allow the inflation of the tire when the control system applies the first pressure and the deflation of the tire, disconnecting the tire from the single line and connecting it with the external environment.

The dependent claims describe preferred embodiments of the invention, forming an integral part of the present description.

### Brief description of the figures

Further objects and advantages of the present invention will become clear from the detailed description that follows of an example of embodiment of the same (and of its variants) and from the annexed drawings given purely for explanatory and non-limiting purposes, in which:
- figures 1 - 6 show preferred variants of the pressure control circuit according to the present invention;
- figure 7 shows a component in detail according to any of the variants according to figures 3 - 6;
- in figures 8A and 8B an example of the method of operation of the embodiment of figure 4.

The same numbers and the same reference letters in the figures identify the same elements or components or functions.

In the context of this description, the term "second" component does not imply the presence of a "first" component. These terms are in fact used as labels to improve clarity and are not ordinal numbers to be intended in a limitative manner. The elements and features illustrated in the various preferred embodiments, including the drawings, can be combined with each other without however departing from the scope of the present application as described below.

### Detailed description of embodiments of the invention

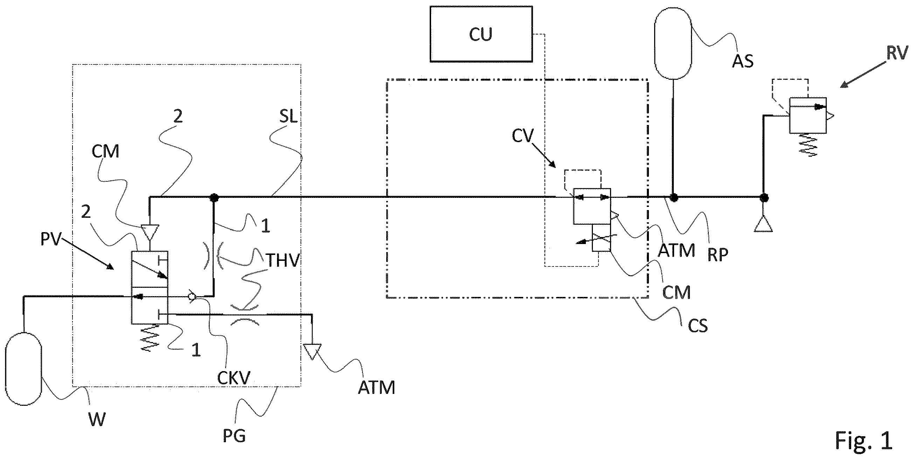

Figure 1 shows an example of a pressure control circuit CC of at least one vehicular wheel according to the present invention.

The circuit includes a proximal valve PV, proximal to the wheel W. The proximal valve PV is connected to a control system CS by means of a single pneumatic SL line. The control system CS is connected to a compressed air source AS, for example a tank, or a compressor, etc., so as to control the flow of compressed air towards the wheel W.

As can be seen from the diagram in figure 1, similarly to what is shown in US2017/0299077, the proximal valve PV is pneumatic and is connected to the control system exclusively through this single line SL. Therefore, there are no further lines, including electric power lines, which reach the aforementioned proximal valve PV.

The proximal valve PV is of the 3-way normally open type, therefore it comprises only a first 1 and a second drawer (spool) 2 and is monostable, being loaded by a spring arranged so as to oppose the control port CM, so that when the pneumatic command signal ends through the CM command port, the spring forces the activation of the first drawer, while, conversely, the command signal through the CM command port forces the valve to activate the second drawer 2 by deactivating the first drawer 1. It is therefore a monostable valve.

For convenience, the first drawer 1 is indicated as PV_1 being relative to the proximal valve PV. In the same way the second drawer 2 is indicated as PV_2 and similarly the control port CM is indicated as PV_CM.

The proximal valve PV is connected, from a first side to a first branch SL_1 of the single line SL and an opening towards the outside ATM, namely at atmospheric pressure, while it is connected through the opposite side to the wheel W. Furthermore, the command port PV_CM is connected to a second branch SL_2 of the single SL line.

The first drawer PV_1 is configured to connect the wheel W with the first branch SL_1 of the single line SL and close the opening towards the outside ATM. In such circumstances, the wheel inflates by drawing air from the SL line.

The second drawer PV_2 is configured to close the first branch SL_1 of the single SL line and connect the wheel with the opening ATM towards the outside. In these circumstances the wheel deflates releasing air directly into the atmosphere, without the air passing through the single SL line.

In other words, the air is released into the environment locally.

On the first branch there is a non-return valve CKV arranged so as to allow the passage of air only from the source AS to the wheel and not vice versa.

A THV calibrated throttle valve is preferably arranged on the first branch SL_1 of the single SL line.

Preferably, a THV calibrated throttle valve can also be arranged on the ATM opening towards the outside.

The components directly connected with the proximal valve PV, ie the first and second branches of the single line and the non-return valve, define a so-called "proximal group" PG. The control system CS is able to regulate the pressure on the single SL line.

In particular, the control system can pressurize the single line SL at an inflation pressure I_P adjustable from zero to a limit value, always lower than an actuation pressure A_P, so that although I_P is adjustable, it is always lower than A_P.

If an inflation pressure greater than zero and less than A_P is applied, the proximal valve PV is open, i.e. the first drawer PV_1 is active, and air inflates the wheel W only if the non-return valve CKV allows inflation, that is, only if the pressure in the wheel is lower than the inflation pressure established in the single line SL.

If the control system applies a pressure at least equal to the actuation pressure A_P to the single line, then, the second branch SL_2 forces the proximal valve PV to close, i.e. to activate the second drawer 2, so that the wheel is connected to the pressure atmospheric and can deflate.

It can be understood that in both situations, both during the inflation and deflation of the wheel, the single SL line is pressurized by the AS source of compressed air through the CS control system.

The CS control system with the connected processing unit CU does not need to memorize the status of the proximal valve, as the status is determined exclusively by the pressure level within the single SL line.

The control system CS includes a control valve CV, for example electric.

This can be indifferently indicated as regulating valve, regulating valve or control valve.

This can be of any type, for example a three-way proportional (two drawers) or a proportional pressure regulator (a drawer with feedback).

Figure 1 shows a preferred configuration, in which the regulating valve is a proportional pressure regulator with feedback.

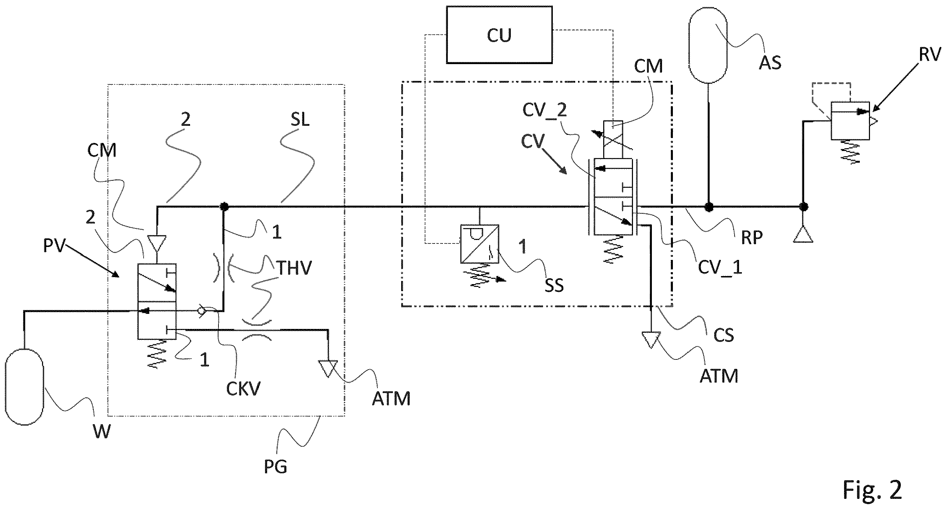

On figure 2, the control system CS differs from that of figure 1 in that a three-way proportional valve is implemented. This, in the absence of a command signal, for example electrical, has a spring which forces the activation of the first drawer CV_1 which connects the single line SL to an opening towards the outside ATM and closes a source conduit SP which interconnects the regulating valve CV with the compressed air source AS. In other words, according to the scheme of figure 2, when the control system does not regulate the pressure in the wheel W, i.e. by inflating or deflating it, the single line SL is at atmospheric pressure and therefore, the wheel is completely isolated from the source AS. When the control signal leads to the activation of the second drawer CV_2 through the control port CV_CM of the same valve CV, the opening towards the outside ATM is closed, while a calibrated connection is established between the source conduit SP and the single SL line. Preferably, the source pipe SP is also connected to an overpressure valve RV, which avoids the control system CS to be exposed to excessive pressure.

According to the scheme on figure 2, the control system CS also includes a pressure sensor SS arranged on the single line SL and operationally connected with the processing unit CU to allow it to monitor the pressure within the single SL line. The throttle THV on the port of the first drawer PV_1 has the purpose of obtaining a gradual deflation of the wheel.

Based on the activation time of the second drawer PV_2, the processing unit can estimate the pressure decrease in the wheel W. During the wheel inflation, the processing unit can estimate the pressure reached by the wheel by means of the measurement from the sensor SS. In particular, as long as the check valve is closed, the sensor SS measures a pressure ramp, as soon as the check valve opens, the pressure trend has a discontinuity until the pressure stabilizes. Knowing the characteristics of the check valve and the calibration of the calibrated throttle valve THV on the first branch SL_1 of the single SL line, the pressure reached in the wheel can be estimated.

By means of trials, it is possible to relate the inflation time interval between the aforementioned discontinuity and the aforementioned stabilization of the pressure with the pressure measured directly on the wheel, for example using a traditional pressure gauge. A function or a look-up-table can therefore be generated to be stored in the processing unit CU. In the case of implementation of the scheme on figure 1, on the other hand, the pressure level in the wheel is directly adjustable by setting the CV valve. Nevertheless, even in this case a pressure sensor SS can be implemented to have an external feedback loop.

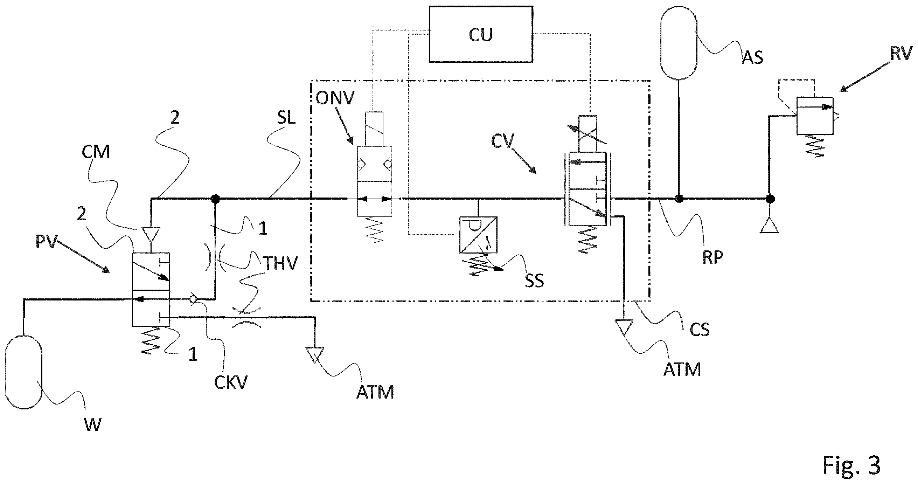

Figure 3 differs from figures 1 and 2 for the presence of an additional ONV valve for enabling the pressurization of the single line SL, preferably of the ON/OFF type, arranged on the single line SL between the control valve CV and the pressure sensor SS or between the pressure sensor SS and the single line SL.

The ONV ON/OFF valve is a 2-way valve of the normally open type, therefore monostable. When the command signal is applied to the relative command port ONV_CM, the valve closes. As soon as this command signal ceases, the valve opens again. This ONV valve can be commanded to close during the inflation of the wheel W to keep the check valve CKV open and to obtain a static and more precise measurement of the pressure installed in the wheel.

The logic could also be inverted, this would lead to less energy consumption, but would keep the single line pressurized when the pressure monitoring and/or control logic is deactivated.

Furthermore, this ONV valve can be controlled to close after the application of the operating pressure A_P to the single line SL, so as to keep the source AS isolated during the deflation of the wheel W.

When the ONV valve is located downstream of the pressure sensor SS, i.e. between the pressure sensor and the single line SL, it is immediate to extend the present scheme to an independent control of two or more wheels of a vehicle.

When, on the other hand, the ONV valve is arranged between the CV valve and the pressure sensor SS, then parallel and simultaneous control of the pressure of two or more wheels of a vehicle is envisaged.

A configuration can also be identified in which two or more wheels and therefore two or more single lines SL are connected to an ONV valve.

In the closed conditions of the ONV valve, the operating condition of the control valve CV is not relevant. It is preferred, however, to eliminate the relative command signal to minimize the system's energy consumption. In addition, the pressure within the single line SL can be monitored by the sensor SS.

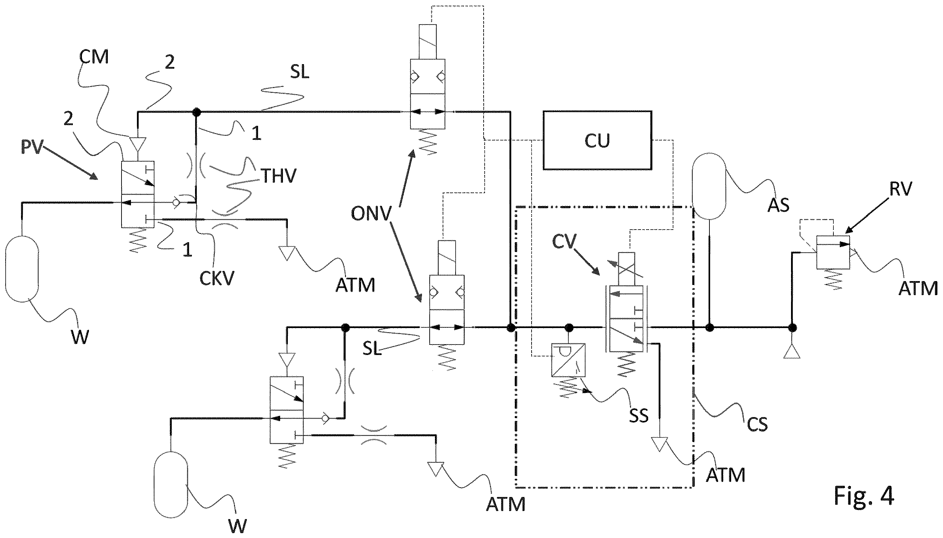

Figure 4 is immediately derivable from the configuration of Figure 3. In this case, each wheel is equipped with a relative ONV valve, a relative single line with a relative proximal valve PV, etcc.

It must be clear that the scheme of figure 4 can also be derived from the scheme of figure 1.

The ONV valve of figure 4 is still preferably of the ON/OFF type.

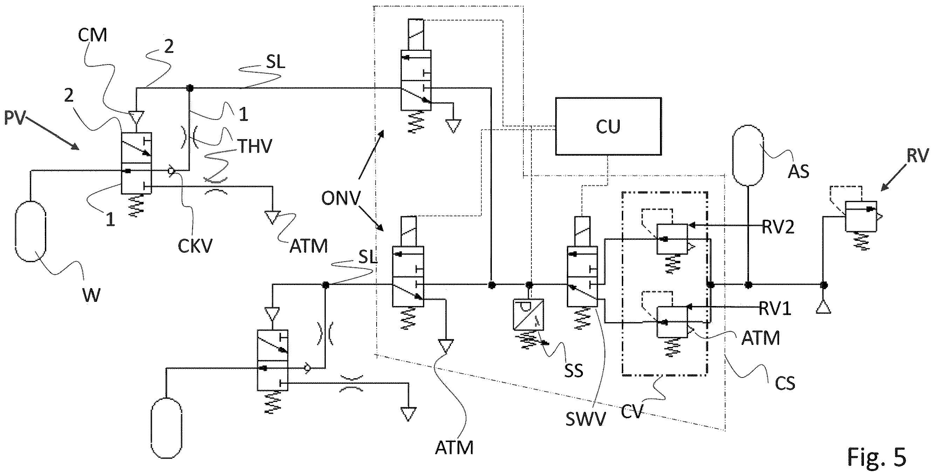

Figure 5, momentarily neglecting the components responsible for regulating the pressures, shows a scheme in which three-way ONV valves are used, wherein the first drawer blocks the delivery of compressed air from the source AS and simultaneously connects the single line with atmospheric pressure. This function is identical to that implemented by the regulating valve CV of the scheme on figure 2.

In other words, the functionality of isolating the proximal valve PV from the pressurized circuit has been achieved in a different way with respect to the solution of figure 2. Figure 5 shows a different way of adjusting the pressures. In particular, this embodiment serves to clarify that in place of the controllable pressure regulating valve CV, two pressure regulating valves RV1 and RV2 with fixed thresholds can be used, in order to have the three pressure levels: zero, I_P, A_P according to the nomenclature used above. The switching between the two valves RV1 and RV2 is carried out by means of the valve SWV placed between the two regulating valves RV1 and RV2 and the single SL line.

The SWV valve comprises at least a first 1 and a second drawer 2. The first drawer connects the single SL line to the AS source by means of a first RV1 valve with fixed threshold, while the second drawer connects the single SL line to the AS source via a second valve with fixed threshold. The first valve with fixed threshold allows the inflation of the wheel at a pre-established pressure I_P, while the second valve RV2 with fixed threshold, allows to apply an actuation pressure A_P greater than I_P forcing the proximal valve to activate the second drawer 2 which puts in connection with the wheel with the ATM opening towards the outside allowing the wheel to deflate.

Both the first and the second fixed threshold valves RV1, RV2 are connected to the AS source. Obviously, it is possible to prepare as many fixed adjustment valves as thee pressure levels to be managed in the wheel. In parallel, the SWV valve must be replaced with a valve that has as many drawers as the fixed pressure regulating valves RV1, RV2, etc ...

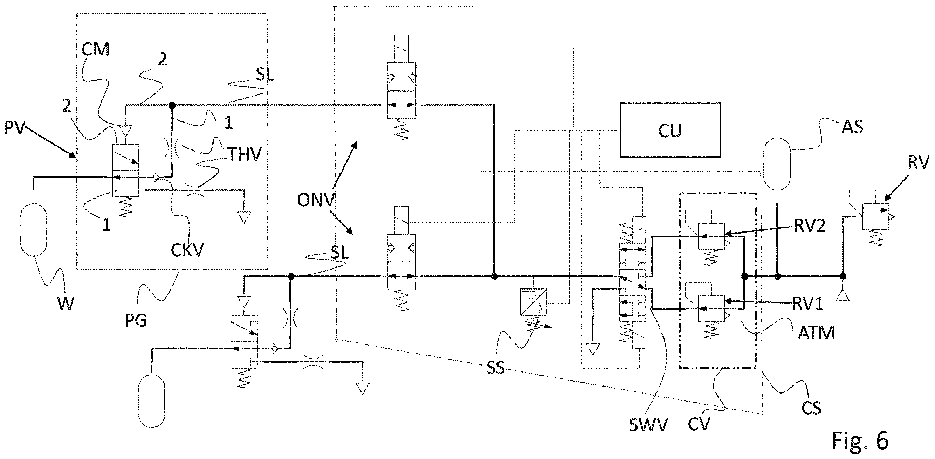

Figure 6 shows a further solution similar to the previous one, with fixed pressure regulating valves RV1, RV2, etcc. wherein, however, the insulation functionality of the proximal valve PV is integrated in the SVW valve which has one drawer more than the number of drawers of the corresponding valve in the solution shown in figure 5. Each valve drawer corresponds to an operating position of the same valve, unless it is a regulating valve. Here a drawer is designed to disconnect the outputs of the fixed pressure regulating valves RV1, RV2 from the single SL line and to connect the latter to the atmospheric pressure ATM.

Some of the control valves can be "completely mechanical", that is with fixed thresholds, for example the CV group of figure 6. For example, in the solution of figure 6, the CU can be eliminated and replaced with at least two buttons for at least one single line (or even all), for example by making available to the driver a tire pressure monitoring system known per se (TMPS). More specifically, a selector can be arranged to select the line relating to a tire and the two aforementioned buttons allow the administration of A P or I_P. From an operation point of view, the present invention provides to pressurize the single SL line to a first pressure level to inflate the wheel to a corresponding wheel pressure level and to pressurize the single SL line to a second pressure level A_P, greater than the first, to deflate the wheel.

Compared to the known solutions, this allows to have a proximal valve PV much simpler than the known ones and more easily integrated into the wheel.

Furthermore, the aspect that the single line SL is not used to let the air flow out of the wheel during a relating deflation, allows to have a very simple and reduced control system, as for example in the solution of figure 1, or a control system with very inexpensive components as in the solutions of figures 5 and 6.

Furthermore, according to the present invention, a regulation cycle can foresee a preventive deflation of the wheel and a subsequent inflation up to a target pressure lower than A_P. It can be seen that all the schemes shown have a substantially invariable PG "proximal group".

A vehicle, preferably industrial or work, can be equipped with the system object of the present invention for controlling one or more wheels individually or together. In particular, it can be foreseen to have a control system for each wheel with a processing unit configured to monitor and control the pressures on the single SL lines, or it can be foreseen to connect all the proximal valves of the wheels to a single and common control system.

Evidently, the most deflated wheel control valve opens first and therefore allows an inflow of air for a longer time. When the pressure measurement by the single sensor SS is stabilized then the wheels can be isolated by the depressurization of the single SL lines.

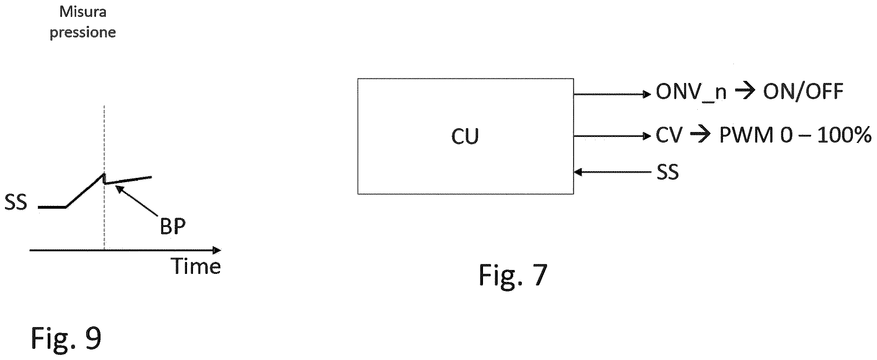

Figure 7 shows in detail the processing unit relative to one of the diagrams of figures 3 - 6, with the relative inputs/outputs.

The unit is configured to receive the sensor pressure SS signal at the input and is configured to control the valve CV and the ONV valve.

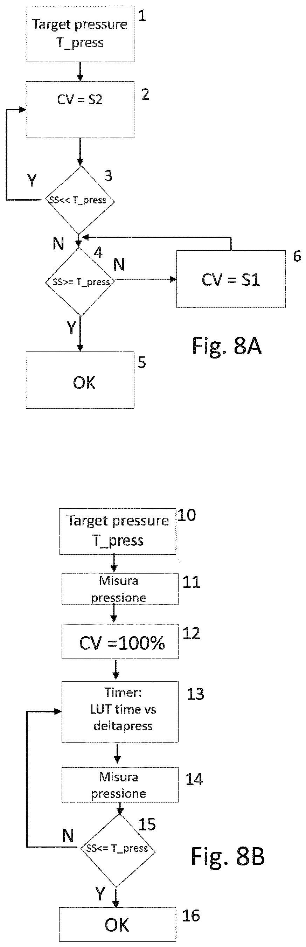

The flow charts of figures 8A and 8B have been made on the basis of one of the embodiments of figures 2 - 4.

The diagram in figure 8A relates to the inflation of a tire and includes:
- (Step 1) acquisition of a target pressure value T_press to inflate the wheel; it should be considered that the inflation pressure I_P must always be greater than the target pressure T_press, otherwise, there is no compressed air flow towards the tire and T_press is never reached;
- (Step 2) controlling the valve CV at an inflation pressure value S2, with I_P < S2 < Pmax, where Pmax is the maximum pressure that can be expressed without causing wheel deflation,
- (Step 3) as long as the pressure measured by the pressure sensor SS does not approach the target pressure T_press, the control of the valve CV remains unchanged,

- (Step 4) if the pressure measured by the pressure sensor approaches the target pressure (T_press) then
- (Step 6) reduction of the supply pressure to S1, with I_P <S1 <S2, through the valve CV, until the target pressure is reached, after which
- (Step 5) closing the CV valve.

The present inflation method is particularly advantageous because it allows to rapidly inflate the tire by progressively closing the valve CV when the measured pressure approaches the target pressure. This is extremely advantageous when the tire has large dimensions as in the case of earth moving machine tires.

It is clear that steps 4 and 6 are optional. It is also evident that further steps similar to steps 4 and 6 can be foreseen to obtain an ever slower inflation of the tire with an increasingly precise and stable pressure measurement.

The flowchart of Figure 8B shows instead an example of a deflation procedure, including the steps:
- (Step 10) acquisition of target pressure T_press,
- (Step 11) measuring the pressure of at least one tire;
- (Step 12) opening of the valve CV so as to reach the operating pressure A_P;
- (Step 13) calculation and activation of a timer proportional to the pressure difference between the measured pressure and the target pressure (T_press);
- (Step 14) pressure monitoring via the pressure sensor SS,
- (Step 15) if the measured pressure is less than equal to the target pressure, then
- (Step 16) stop the procedure, otherwise, recalculate and activate the timer (Step 13).

The pressure measurement on a tire cannot be performed while the single line while it is at atmospheric pressure, except through a TPMS (Tire Pressure Monitoring System).

To overcome the installation of a TPMS, according to a preferred variant of the present invention, an inflation procedure can be used and the pressure trend along the single line can be monitored, schematized in figure 9. In particular, a tire inflation at a pressure threshold Sx and interrupt the procedure when the pressure ramp measured along the single line shows a discontinuity BP. This discontinuity is caused by the opening of the non-return valve CKV, which causes a sudden reduction in pressure along the single SL line.

In these operating conditions, the sensor SS measures the pressure along the single line, which is in pneumatic communication with the tire.

Preferably, Sx is set slightly higher than the last target pressure T_press, so as not to excessively disturb the pressure measurement itself.

The present invention can be advantageously carried out by means of a computer program which includes coding means for the realization of one or more steps of the method, when this program is executed on a computer and coupled to a pressure control circuit of a tire according to the present invention.

Therefore, it is understood that the scope of protection extends to said computer program and further to computer readable means which comprise a recorded message, said computer readable means comprising program coding means for carrying out one or more steps of the method, when this program is run on a computer.

Implementing variations to the non-limiting example described are possible, without however departing from the scope of protection of the present invention, as defined by the content of the claims.

From the above description, the person skilled in the art is able to realize the object of the invention without introducing further construction details.

## Claims

1. Pressure control circuit (CC) of a tire (W), configured to be used on board of a vehicle, the pressure control circuit (CC) comprising:
- pneumatic connection means (RP) to a source (AS) of compressed air,
- a control system (CS) designed to control a flow of compressed air from the pneumatic connection means (RP) towards the tire,
- a proximal valve group (PG) operatively connected with the tire,
- a single line (SL), exclusively pneumatic, operatively connecting said control system (CS) with said proximal valve group (PG),
wherein the control system is arranged to pressurize said single line to
+ a first pressure (I_P) of inflation, and
+ a second pressure (A_P) of actuation, greater than the first pressure of inflation (I_P), and wherein the proximal valve group (PG) is configured to allow
+ the inflation of the tire when the control system applies the first pressure and
+ deflation of the tire when the control system applies the second pressure, disconnecting the tire from the single line and connecting it with the external environment (ATM) directly; the pressure control circuit (CC) is **characterized in that** said control system, when it does not pressurize the single line (SL), is configured to maintain the single line (SL) with the external environment (ATM).

2. Circuit according to the preceding claim, wherein said proximal group comprises
- a normally open three-way proximal valve (PV), having
+ an input port operatively connected with the single line in a first operating condition,
+ an exit port connected to the external environment (ATM) in a second operating condition,
+ an input / output port operatively connected to the tire (W),
+ a control port (CM) operatively connected with a second branch (SL_2) of the single line (SL) to force the proximal valve in the second operating condition,
- a check valve (CKV) connected between the input port of the proximal valve (PV) and a first branch (SL_1) of the single line (SL),
so as
+ when the control system (CS) applies the first pressure (I_P), the proximal valve is in the first operating condition, and when the first pressure determines the opening of the non-return valve, a consequent inflation of the tire occurs, and
+ when the control system (CS) applies the second pressure (A_P), the switching of the proximal valve occurs in the second operating condition which causes the tire to deflate, connecting the inlet/outlet port with the second port, in turn, connected with the external environment (ATM).

3. Circuit according to any one of the preceding claims, wherein said control system (CS) includes a control valve (CV) that consists alternatively in:
- a pressure regulating valve, adjustable (drawer with feedback) or
- a proportional three-way control valve (two positions) or
- a group comprising at least two fixed threshold regulating valves (RV1, RV2) with fixed setting, combined with a switching valve (SWV) configured to determine the operation of one at a time of the two regulating valves (RV1, RV2) of the group (CV).

4. Circuit according to claim 3 wherein the control valve (CV)
is a group comprising at least two fixed threshold regulating valves (RV1, RV2) with fixed setting, combined with a switching valve (SWV) configured to determine the operation of one at a time of the two regulating valves (RV1, RV2) of the group (CV) and
wherein said switching valve (SWV) is configured to connect said single line with the external environment (ATM) when none of the two fixed threshold regulating valves (RV1, RV2) fixed are operational.

5. Circuit according to any one of the preceding claims, wherein said control system includes a valve (ONV) for enabling, ON/OFF, the pressurization of the single line (SL).

6. Circuit according to claim 2, wherein the three-way proximal valve (PV) is suitable for enabling the pressurization of the single line (SL) and is suitable for realizing a first, preferably stable, operating configuration, in which it connects the single line with the external environment (ATM) and a second, preferably forced, operating condition, in which it connects the single line (SL) with the control valve (CV).

7. Circuit according to any one of the preceding claims, wherein said control system (CS) further comprises a pressure sensor (SS) arranged to measure a pressure in the single line, at least during the application of said first pressure (I_P), of inflation.

8. Circuit according to any one of claims 5 or 6, wherein said control system (CS) further comprising a pressure sensor (SS) arranged to measure a pressure in the single line, at least during the application of said first pressure (I_P), of inflation, said pressure sensor (SS) being either operatively positioned between the enabling valve (ONV) and the control valve (CV) to enable the pressurization of the single line (SL) between the enabling valve (ONV) and the switching valve (SWV) to enable the pressurization of the single line (SL)

9. Circuit according to any one of the preceding claims, wherein said control system is configured to operate the pressure control of one tire (W) of the vehicle at a time or of two or more tires at the same time.

10. Circuit according to claim 9, wherein the control system comprises a number of enabling valves (ONV), corresponding to a number of tires operatively connected to the circuit (CC) and wherein each of said enabling valves (ONV) is individually controllable.

11. Vehicle, preferably agricultural, comprising on board of the vehicle the pressure control circuit (CC) of a tire (W) according to any one of claims 1 - 10.

12. Method for operating a pressure control circuit according to any one of the preceding claims to 10, comprising a first step of applying the second pressure (A_P) of actuation, to determine at least a partial deflation of the tire and subsequently a second step of applying the first pressure (I_P) of inflation, until reaching a predetermined pressure inside the tire.

13. Method of measurement of a tire pressure by means of a pressure control circuit (CC) according to any one of the preceding claims 7 - 10, comprising a tire inflation procedure and a simultaneous monitoring of a pressure on said single line by means of said pressure sensor (SS) and to store, as tire pressure, the measured pressure during or immediately after a discontinuity of a monitored pressure trend.

14. A computer program comprising program coding means adapted to carry out all steps of claim 12 or 13, when said program is run on a computer and coupled to a pressure control circuit (CC) of a tire (W) according to any of claims 1 to 10.

## Patentansprüche

1. Drucksteuerkreislauf (CC) eines Reifens (W), der dazu vorgesehen ist, an Bord eines Fahrzeugs verwendet zu werden, wobei der Drucksteuerkreislauf (CC) aufweist:
- ein pneumatisches Verbindungsmittel (RP) zu einer Druckluftquelle (AS),
- ein Steuersystem (CS), das dazu eingerichtet ist, einen Fluss von Druckluft von dem pneumatischen Verbindungsmittel (RP) in Richtung des Reifens zu steuern,
- eine proximale Ventilgruppe (PG), die wirkend mit dem Reifen verbunden ist,
- eine einzelne Leitung (SL), ausschließlich pneumatisch, die das Steuersystem (CS) wirkend mit der proximalen Ventilgruppe (PG) verbindet,
wobei das Steuersystem dazu eingerichtet ist, die einzelne Leitung mit Druck zu beaufschlagen bis zu
+ einem ersten Befülldruck (I_P), und
+ einem zweiten Betätigungsdruck (A_P), der größer als der erste Befülldruck (I_P) ist, und
wobei die proximale Ventilgruppe (PG) dazu eingerichtet ist, um folgendes zu ermöglichen:
+ Befüllen des Reifens, wenn das Steuersystem den ersten Druck beaufschlagt, und
+ Ablassen von Luft aus dem Reifen, wenn das Steuersystem den zweiten Druck beaufschlagt, Trennen des Reifens von der einzelnen Leitung und direktes Verbinden des Reifens mit der äußeren Umgebung (ATM); wobei der Drucksteuerkreislauf (CC) **dadurch gekennzeichnet ist, dass** das Steuersystem, wenn es nicht die einzelne Leitung (SL) mit Druck beaufschlagt, dazu eingerichtet ist, die einzelne Leitung (SL) mit der äußeren Umgebung (ATM) in Verbindung zu halten.

2. Kreislauf nach dem vorhergehenden Anspruch, wobei die proximale Ventilgruppe aufweist:
- ein normalerweise offenes, proximales Dreiwegeventil (PV) mit:
+ einem Eingangskanal, der wirkend mit der einzelnen Leitung in einem ersten Betriebszustand verbunden ist,
+ einem Ausgangskanal, der mit der äußeren Umgebung (ATM) in einem zweiten Betriebszustand verbunden ist,
+ einem Eingangs-/Ausgangskanal, der wirkend mit dem Reifen (W) verbunden ist,
+ einem Steuerkanal (CM), der wirkend mit einer zweiten Abzweigung (SL_2) der einzelnen Leitung (SL) verbunden ist, um das proximale Ventil in den zweiten Betriebszustand zu versetzen,
- einem Rückschlagventil (CKV), das zwischen dem Eingangskanal des proximalen Ventils (PV) und einer ersten Abzweigung (SL_1) der einzelnen Leitung (SL) eingefügt ist, sodass,
+ wenn das Steuersystem (CS) den ersten Druck (I_P) beaufschlagt, das proximale Ventil in dem ersten Betriebszustand ist, und wenn der erste Druck das Öffnen des Rückschlagventils bestimmt, ein anschließendes Befüllen des Reifens erfolgt, und
+ wenn das Steuersystem (CS) den zweiten Druck (A_P) beaufschlagt, das Schalten des proximalen Ventils in den zweiten Betriebszustand erfolgt, was dazu führt, dass der Reifen Luft ablässt, Verbinden des Eingangs-/Ausgangskanals mit dem zweiten Kanal, der seinerseits mit der äußeren Umgebung (ATM) verbunden ist.

3. Kreislauf nach einem der vorhergehenden Ansprüche, wobei das Steuersystem (CS) ein Steuerventil (CV) umfasst, das alternativ besteht aus:
- einem Druckregelventil, das verstellbar ist (Wegeventil mit Feedback), oder
- einem proportionalen Dreiwegesteuerventil (zwei Positionen), oder
- einer Gruppe, die mindestens zwei Regelventile mit festen Grenzwerten (RV1, RV2) mit einer festen Einstellung aufweist, die mit einem Schaltventil (SWV) kombiniert sind, das dazu eingerichtet ist, den Betrieb von einem nach dem anderen der zwei Regelventile (RV1, RV2) der Gruppe (CV) zu bestimmen.

4. Kreislauf nach Anspruch 3, wobei das Steuerventil (CV) eine Gruppe ist, die mindestens zwei Regelventile mit festen Grenzwerten (RV1, RV2) aufweist, die mit einem Schaltventil (SWV) kombiniert sind, das dazu eingerichtet ist, den Betrieb von einem nach dem anderen der zwei Regelventile (RV1, RV2) aus der Gruppe (CV) zu bestimmen, und
wobei das Schaltventil (SWV) dazu eingerichtet ist, die einzelne Leitung mit der äußeren Umgebung (ATM) zu verbinden, wenn keines der zwei Regelventile (RV1, RV2) mit fest eingestellten Grenzwerten betreibbar ist.

5. Kreislauf nach einem der vorhergehenden Ansprüche, wobei das Steuersystem ein Ventil (ONV) zum Auslösen von EIN/AUS der Druckbeaufschlagung der einzelnen Leitung (SL) umfasst.

6. Kreislauf nach Anspruch 2, wobei das proximale Dreiwegeventil (PV) dazu eingerichtet ist, das Beaufschlagen der einzelnen Leitung (SL) mit Druck zu ermöglichen und dazu ausgebildet ist, einen ersten, vorzugsweise stabilen, Betriebszustand, in welcher es die einzelne Leitung mit der äußeren Umgebung (ATM) verbindet, und einen zweiten, vorzugsweise erzwungenen, Betriebszustand auszuführen, in welchem es die einzelne Leitung (SL) mit dem Steuerventil (CV) verbindet.

7. Kreislauf nach einem der vorhergehenden Ansprüche, wobei das Steuersystem (CS) des Weiteren einen Drucksensor (SS) aufweist, der dazu angeordnet ist, einen Druck in der einzelnen Leitung mindestens während der Beaufschlagung des ersten Befülldrucks (I_P) zu messen.

8. Kreislauf nach einem der Ansprüche 5 oder 6, wobei das Steuersystem (CS) des Weiteren einen Drucksensor (SS) aufweist, der dazu angeordnet ist, einen Druck in der einzelnen Leitung mindestens während der Beaufschlagung des ersten Befülldrucks (I_P) zu messen, wobei der Drucksensor (SS) entweder wirkend zwischen dem Auslöseventil (ONV) und dem Steuerventil (CV) angeordnet ist, um das Beaufschlagen der einzelnen Leitung (SL) mit Druck zu ermöglichen, oder zwischen dem Auslöseventil (ONV) und dem Schaltventil (SWV) angeordnet ist, um die Druckbeaufschlagung der einzelnen Leitung (SL) zu ermöglichen.

9. Kreislauf nach einem der vorhergehenden Ansprüche, wobei das Steuersystem dazu eingerichtet ist, die Drucksteuerung eines Reifens (W) des Fahrzeugs zu einem gegebenen Zeitpunkt oder von zwei oder einer Mehrzahl von Reifen zu demselben Zeitpunkt auszuführen.

10. Kreislauf nach Anspruch 9, wobei das Steuersystem eine Anzahl von Auslöseventilen (ONV) aufweist, die einer Anzahl von Reifen entspricht, die wirkend mit dem Kreislauf (CC) verbunden sind, und wobei jedes der Auslöseventile (ONV) individuell steuerbar ist.

11. Fahrzeug, vorzugsweise ein landwirtschaftliches Fahrzeug, das an Bord des Fahrzeugs den Drucksteuerkreislauf (CC) eines Reifens (W) nach einem der Ansprüche 1 bis 10 aufweist.

12. Verfahren zum Betreiben eines Drucksteuerkreislaufs nach einem der Ansprüche 1 bis 10, das einen ersten Schritt eines Beaufschlagens des zweiten Betätigungsdrucks (A_P) aufweist, um mindestens ein teilweises Druckablassen aus dem Reifen zu bestimmen, und nachfolgend einen zweiten Schritt eines Beaufschlagens eines ersten Befülldrucks (I_P) aufweist, bis ein vorbestimmter Druck innerhalb des Reifens erreicht wird.

13. Verfahren zum Messen eines Reifendrucks mittels eines Drucksteuerkreislaufs (CC) nach einem der Ansprüche 7 bis 10, das einen Reifenbefüllprozess und ein gleichzeitiges Überwachen eines Drucks in der einzelnen Leitung mittels des Drucksensors (SS) aufweist, außerdem das Speichern des gemessenen Drucks als Reifendruck während oder umgehend nach einer Diskontinuität eines überwachten Drucktrends.

14. Computerprogramm, das ein Codierungsmittel aufweist, das dazu eingerichtet ist, alle Schritte aus Anspruch 12 oder 13 auszuführen, wenn das Programm auf einem Computer ausgeführt wird und mit einem Drucksteuerkreislauf (CC) eines Reifens (W) gemäß einem der Ansprüche 1 bis 10 verbunden ist.

## Revendications

1. Circuit de commande de pression (CC) d'un pneu (W), configuré pour être utilisé à bord d'un véhicule, le circuit de commande de pression (CC) comprenant :
- des moyens de connexion pneumatique (RP) à une source (AS) d'air comprimé,
- un système de commande (CS) conçu pour commander le flux d'air comprimé des moyens de connexion pneumatique Z (RP) vers le pneu,
- un groupe de vannes proximales (PG) relié de manière fonctionnelle au pneu,
- une conduite unique (SL), exclusivement pneumatique, reliant de manière fonctionnelle ledit système de commande (CS) audit groupe de vannes proximales (PG), dans lequel le système de commande est conçu pour pressuriser ladite conduite unique à
+ une première pression (I P) de gonflage, et
+ une seconde pression (A P) d'actionnement, supérieure à la première pression de gonflage (I P),
et dans lequel le groupe de vannes proximales (PG) est configuré pour permettre
+ le gonflage du pneu lorsque le système de commande applique la première pression et
+ le dégonflage du pneu lorsque le système de commande applique la seconde pression, déconnectant le pneu de la conduite unique et le connectant directement à l'environnement extérieur (ATM) ; le circuit de commande de pression (CC) est **caractérisé en ce que** ledit système de commande, lorsqu'il ne pressurise pas la conduite unique (SL), est configuré pour maintenir la conduite unique (SL) avec l'environnement extérieur (ATM).

2. Circuit selon la revendication précédente, dans lequel ledit groupe proximal comprend
- une vanne proximale (PV) à trois voies, normalement ouverte, comprenant
+ un port d'entrée connecté de manière fonctionnelle à la conduite unique dans un premier état de fonctionnement,
+ un port de sortie relié à l'environnement extérieur (ATM) dans un second état de fonctionnement,
+ un port d'entrée/de sortie relié de manière fonctionnelle au pneu (W),
+ un port de commande (CM) relié de manière fonctionnelle à une seconde branche (SL 2) de la conduite unique (SL) pour forcer la vanne proximale dans le second état de fonctionnement,
- un clapet anti-retour (CKV) connecté entre le port d'entrée de la vanne proximale (PV) et une première branche (SL 1) de la conduite unique (SL),
de sorte que
+ lorsque le système de commande (CS) applique la première pression (I P), la vanne proximale est dans le premier état de fonctionnement, et lorsque la première pression détermine l'ouverture du clapet anti-retour, un gonflage conséquent du pneu se produit, et
+ lorsque le système de commande (CS) applique la seconde pression (A P), la commutation de la vanne proximale se produit dans le second état de fonctionnement qui provoque le dégonflage du pneu, reliant le port d'entrée/de sortie au second port, à son tour relié à l'environnement extérieur (ATM).

3. Circuit selon l'une quelconque des revendications précédentes, dans lequel ledit système de commande (CS) comprend une vanne de commande (CV) qui consiste alternativement en :
- une vanne de régulation de pression, réglable (tiroir avec retour d'information) ou
- une vanne de commande proportionnelle à trois voies (deux positions) ou
- un groupe comprenant au moins deux vannes de régulation à seuil fixe (RV1, RV2) à réglage fixe, associé à une vanne de commutation (SWV) configurée pour déterminer le fonctionnement d'une à la fois des deux vannes de régulation (RV1, RV2) du groupe (CV).

4. Circuit selon la revendication 3 dans lequel la vanne de commande (CV) est un groupe comprenant au moins deux vannes de régulation à seuil fixe (RV1, RV2) à réglage fixe, associé à une vanne de commutation (SWV) configurée pour déterminer le fonctionnement d'une à la fois des deux vannes de régulation (RV1, RV2) du groupe (CV) et
dans lequel ladite vanne de commutation (SWV) est configurée pour connecter ladite conduite unique à l'environnement extérieur (ATM) lorsqu'aucune des deux vannes de régulation à seuil fixe (RV1, RV2) fixées n'est opérationnelle.

5. Circuit selon l'une quelconque des revendications précédentes, dans lequel ledit système de commande comprend une vanne (ONV) pour activer, ON/OFF, la pressurisation de la conduite unique (SL).

6. Circuit selon revendication 2, dans lequel la vanne proximale à trois voies (PV) est apte à permettre la pressurisation de la conduite unique (SL) et est apte à réaliser une première configuration de fonctionnement, de préférence stable, dans laquelle elle relie la conduite unique à l'environnement extérieur (ATM) et un second état de fonctionnement, de préférence forcé, dans laquelle elle relie la conduite unique (SL) à la vanne de commande (CV).

7. Circuit selon l'une quelconque des revendications précédentes, dans lequel ledit système de commande (CS) comprend en outre un capteur de pression (SS) agencé pour mesurer une pression dans la conduite unique, au moins pendant l'application de ladite première pression (I P) de gonflage.

8. Circuit selon l'une quelconque des revendications 5 ou 6, dans lequel ledit système de commande (CS) comprend en outre un capteur de pression (SS) agencé pour mesurer une pression dans la conduite unique, au moins pendant l'application de ladite première pression (I P) de gonflage, ledit capteur de pression (SS) étant positionné de manière fonctionnelle entre la vanne d'activation (ONV) et la vanne de commande (CV) pour permettre la pressurisation de la conduite unique (SL) ou entre la vanne d'activation (ONV) et la vanne de commutation (SWV) pour permettre la pressurisation de la conduite unique (SL).

9. Circuit selon l'une quelconque des revendications précédentes, dans lequel ledit système de commande est configuré pour commander la pression d'un pneu (W) du véhicule à la fois ou de deux pneus ou plus en même temps.

10. Circuit selon la revendication 9, dans lequel le système de commande comprend un certain nombre de vannes d'activation (ONV), correspondant à un certain nombre de pneus connectés de manière fonctionnelle au circuit (CC) et dans lequel chacune de ces vannes d'activation (ONV) est commandable individuellement.

11. Véhicule, de préférence agricole, comprenant à bord du véhicule le circuit de commande de pression (CC) d'un pneu (W) selon l'une quelconque des revendications 1 à 10.

12. Procédé de fonctionnement d'un circuit de commande de pression selon l'une quelconque des revendications précédentes 1 à 10, comprenant une première étape d'application de la seconde pression (A P) d'actionnement, pour déterminer au moins un dégonflage partiel du pneu et ensuite une seconde étape d'application de la première pression (I P) de gonflage, jusqu'à atteindre une pression prédéterminée à l'intérieur du pneu.

13. Procédé de mesure de la pression d'un pneu au moyen d'un circuit de commande de pression (CC) selon l'une quelconque des revendications précédentes 7 à 10, comprenant une procédure de gonflage du pneu et une surveillance simultanée d'une pression sur ladite conduite unique au moyen de ce capteur de pression (SS) et pour stocker, en tant que pression du pneu, la pression mesurée pendant ou immédiatement après une discontinuité d'une tendance de pression surveillée.

14. Programme informatique comprenant des moyens de codage de programme adaptés pour exécuter toutes les étapes de la revendication 12 ou 13, lorsque ledit programme est exécuté sur un ordinateur et couplé à un circuit de commande de pression (CC) d'un pneu (W) selon l'une quelconque des revendications 1 à 10.
